Europäisches Patentamt

European Patent Office

Office européen des brevets

(19)

(11) Veröffentlichungsnummer: **0 281 968 B1**

## (12) EUROPÄISCHE PATENTSCHRIFT

(45) Veröffentlichungstag der Patentschrift: **06.05.92**

(21) Anmeldenummer: **88103430.0**

(22) Anmeldetag: **05.03.88**

(51) Int. Cl.⁵: **F16L 3/14**, H02G 3/26,
F16B 2/08, F16L 3/22

(54) **Kunststoffspannband.**

(30) Priorität: **11.03.87 DE 3707782**

(43) Veröffentlichungstag der Anmeldung:
**14.09.88 Patentblatt 88/37**

(45) Bekanntmachung des Hinweises auf die
Patenterteilung:
**06.05.92 Patentblatt 92/19**

(84) Benannte Vertragsstaaten:
**DE ES FR GB IT**

(56) Entgegenhaltungen:
**DE-A- 3 544 938**
**DE-A- 3 608 981**
**DE-C- 2 813 484**
**US-A- 3 605 199**

(73) Patentinhaber: **A. Raymond KG**
**Teichstrasse 57**
**W-7850 Lörrach(DE)**

(72) Erfinder: **Camenisch, Gian Carl**
**Im Eggacker 9**
**CH-4465 Magden(CH)**

(74) Vertreter: **Kirchgaesser, Johannes, Dipl.-Ing.**
**p/a Fa. A. RAYMOND KG, Teichstrasse 57**
**W-7850 Lörrach(DE)**

**Beschreibung**

Die Erfindung bezieht sich auf ein Kunststoffspannband der im Oberbegriff des Anspruchs 1 angegebenen und beispielsweise durch die DE-C- 28 13 484 bekannt gewordenen Art.

Derartige Spannbänder dienen zum Halten von Kabeln unterschiedlicher Durchmesser und insbesondere von Kabelbündeln und bieten bei der Montage den großen Vorteil, daß das Spannband nach Umschlingen des zu haltenden Gegenstandes schnell und einfach mit einer Sprosse in den Verriegelungshaken eingehängt werden kann, nachdem das Band vorher stramm um den Gegenstand gespannt worden ist. Allerdings ist es bei den bekannten Bändern erforderlich, daß diese zunächst etwas überdehnt werden, damit die passende Sprosse über die vorstehende Hakennase gehoben werden kann, um dann entsprechend dem Nasenvorsprung wieder zurückzufedern. Will man das Band lösen, so muß zunächst das Bandende gefaßt und stark nach unten gezogen werden, bis die ausgehängte Sprosse frei an der Hakennase vorbei hochgeführt werden kann.

Dieses starke Spannen, beziehungsweise überdehnen des Bandes beim Einhängen und Lösen, wird als Nachteil empfunden, weil es mit einem erheblichen Kraftaufwand verbunden ist. Außerdem besteht die Gefahr, daß das montierte Spannband durch einen ungewollten Schlag oder Druck von außen auf die Bandschlaufe im Verriegelungshaken soweit heruntergedrückt wird, daß sich das Band von selbst lösen kann.

Aufgabe der Erfindung ist es daher, beim vorliegenden Spannband das Verriegelungselement so zu gestalten, daß das Ein- wie Aushängen des Bandes erleichtert und ein ungewolltes Aushängen verhindert wird. Diese Aufgabe wird im wesentlichen durch die in Anspruch 1 angegebene Erfindung gelöst, wobei in den Unteransprüchen noch weitere vorteilhafte und förderliche Ausgestaltungsmerkmale enthalten sind, deren Vorteile in der nachfolgenden Zeichnungsbeschreibung ausführlich dargelegt werden.

Die erfindungsgemäß vorgeschlagene Ausbildung des Verriegelungshaken hat gegenüber der bekannten Hakenausbildung den großen Vorteil, daß sich beim Einhängen des Sprossenbandes die Elnführungsspitze wie ein Keil zwischen die beiden benachbarten Sprossen eindrücken läßt und die Sprossen im Niederdrücken dadurch zwangsläufig etwas auseinandergedrückt werden, bis die Haltesprosse in der Rille einrastet. Will man das Band später lösen, so genügt es, das Bandende mit der Hand zu ergreifen und dann einfach hochzuziehen, wobei die den Verriegelungshaken umgebenden Sprossen durch die Keilwirkung zwischen dem oberen Rillenrand und der Haken-rückwand elastisch auseinandergebogen werden. Ein selbständiges Lösen - etwa durch unvorhergesehene Druckausübung auf die Bandschlaufe - ist unmöglich, da die eingehängte Sprosse auf diese Weise nicht freigedrückt werden kann. In diesem Fall kann sich lediglich die hintere Sprosse auf dem Hakenrücken abstützen, nicht aber die vordere Sprosse aushängen.

Ein Ausführungsbeispiel der Erfindung ist in der Zeichnung dargestellt und soll nachfolgend näher erläutert werden.
Es zeigt

Fig. 1    das Kunststoffspannband in einer Seitenansicht,

Fig. 2    das gleiche Band in einer Draufsicht,

Fig. 3    das Befestigungteil mit Blick auf den Verriegelungshaken,

Fig. 4    einen Querschnitt durch den Verriegelungshaken gemäß Linie IV-IV in Fig. 1,

Fig. 5    ein montiertes Spannband kurz vor dem Schließen,

Fig. 6    das fertig montierte Spannband mit geschlossener Schlaufe und

Fig. 7    das geschlossene Spannband beim öffnen der Schlaufe.

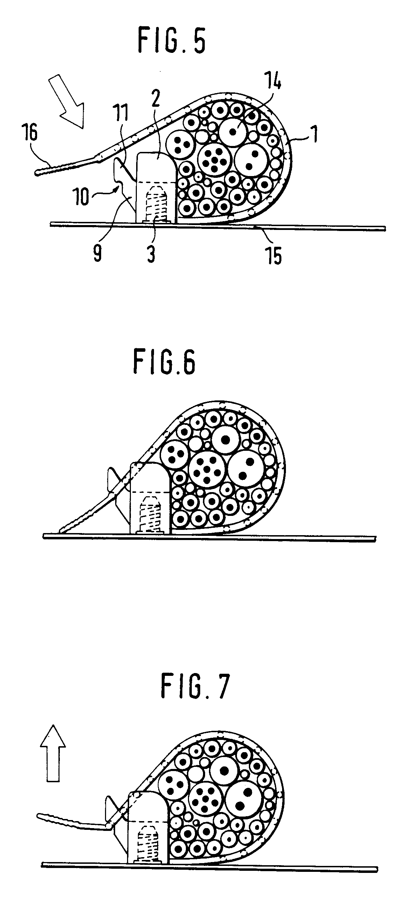

Das in den Figuren dargestellte Spannband ist aus hartelastischem Kunststoff hergestellt und dient zum Halten von Kabeln, Kabelbündeln, Rohren oder dgl. länglicher Gegenstände mit unterschiedlichen Durchmessern. Es besteht im wesentlichen aus einem Sprossenband 1 und einem mit diesem einstückig verbundenen Befestigerteil 2, welches zum Aufdrücken auf einen Gewindebolzen 3 (Fig.5) mit einem Bolzenaufnahmeloch 4 versehen ist. Dieses Loch 4 wird gebildet durch vier bogenförmige Klemmwände 5, welche im Befestigerteil 2 über Stützwände 6 elastisch angeformt sind. Es versteht sich, daß anstelle der bogenförmigen Klemmwände 5 auch andere geeignete Anlageflachen oder Klemmelemente zur Befestigung auf dem Gewindebolzen 3 verwendet werden können. Ebenso kann das Befestigerteil 2 auch für andere Befestigungsarten ausgebildet sein, wie beispielsweise für die Verankerung auf sogenannten T-Bolzen.

Das Sprossenband 1 besteht aus zwei am unteren Ende des Befestigerteils 2 angeformten Sprossenholmen 7 und einer Vielzahl von quer zur Bandrichtung angeordneter Sprossen 8, die mit einem auf der anderen Seite des Befestigerteils 2 angeformten Verriegelungshaken 9 zusammenwirken. Dieser Haken 9 ist mit einer der Form der Sprossen 8 angepaßten Rille 10 und einer aufwärts gerichteten Einführspitze 11 versehen, welche sich beim Einhängen des Sprossenbandes 1 wie ein Keil zwischen zwei benachbarte Sprossen 8 eindrücken läßt. Hierbei mißt der Haken 9 an seinem Vorsprung 12 oberhalb der Rille 10 etwa 10 % mehr als der Abstand zwischen zwei benachbarten Sprossen 8, so daß diese Sprossen 8 beim Einhängen des Bandes 1 zwangsläufig etwas auseinandergedrückt werden, bis die Haltesprosse 8 in die Rille 10 einrasten kann.

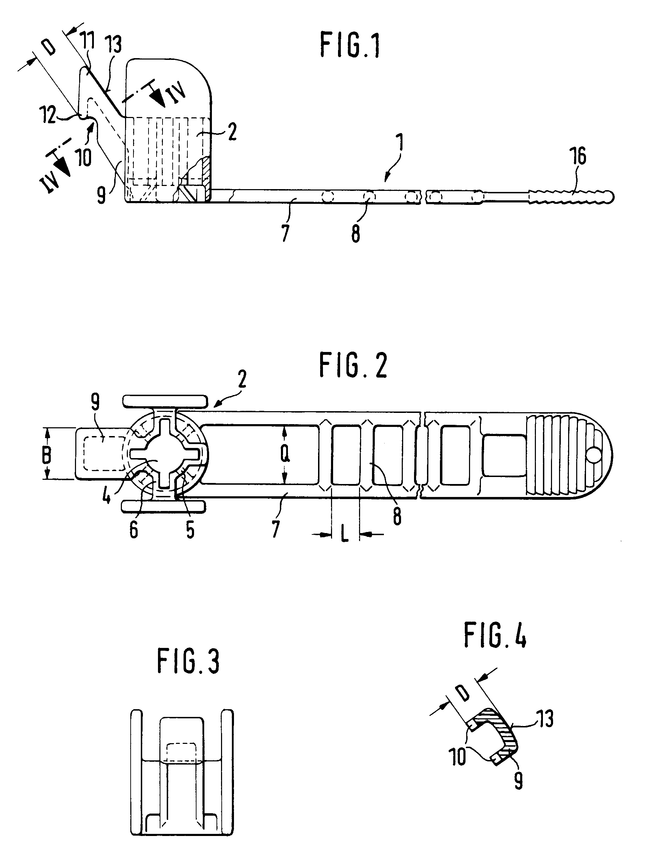

Das elastische Nachgeben der Sprossen 8 setzt jedoch voraus, daß die Breite "B" des Hakens 9 etwa 10 - 15 % schmaler ist als der Querabstand "Q" zwischen den Sprossenholmen 7, so daß die Spreizkraft auf die Sprossen 8 in einem genügenden Abstand von den Sprossenholmen 7 wirken kann. Noch günstiger für das Aufbiegen der Sprossen 8 ist es jedoch, wenn der zum Band 1 hinweisende Rücken 13 des Hakens 9 gewölbt ist (vgl. Fig. 4), weil dann die rückwärtige Sprosse 8 beim Aufdrücken mittig vom Hakenrücken 13 erfaßt und aufgebogen wird.

Im Hinblick auf die variierenden Durchmesser der zu haltenden Kabelbündel 14 ist der Haken 9 am Befestigerteil 2 zweckmäßigerweise so angeformt, daß er unter Berücksichtigung des größten Umschlingungsdurchmessers etwa senkrecht zur Zugrichtung des Sprossenbandes 1 gerichtet ist. Außerdem ist die Einführspitze 11 vorzugsweise zur Bandseite hin geneigt, so daß die einzurastende Sprosse 8 sowohl bei kleinen als auch bei großen Umschlingungsdurchmessern möglichst wenig gespannt ist.

Die vorteilhafte Wirkungsweise des Spannbandes ist anschaulich in den Figuren 5 bis 7 dargestellt, wobei das Befestigerteil 2 jeweils mittels eines Gewindebolzens 3 auf einer Trägerplatte 15 befestigt ist.

In Fig. 5 wird das Sprossenband 1 nach Umschlingung eines Kabelbündels 14 mit der letzten Sprosse 8 vor der Spitze 11 des Verriegelungshakens 9 in Pfeilrichtung so weit niedergedrückt, bis die Sprosse 8 an dem Vorsprung 12 vorbeigeht und, wie in Fig. 6 dargestellt, in die Rille 10 einrastet. Will man das Band 1 wieder lösen, so wird entsprechend Fig. 7 das Bandende 16 in Pfeilrichtung kräftig nach oben gezogen, bis die eingerastete Sprosse 8 nach elastischer Aufweitung der am Hakenrücken 13 anliegenden Sprosse 8 den Hakenvorsprung 12 überwunden hat.

**Patentansprüche**

1.  Kunststoffspannband zum Halten von Kabeln, Kabelbündeln und dgl. länglicher Gegenstände mit einem integrierten Befestigerteil (2) zum Aufdrücken auf einen Steckbolzen (3), vorzugsweise einen Gewindebolzen, wobei das Spannband (1) an einem in einer Montagelage unteren Ende des Befestigerteils (2) angeformt und mit quer zur Bandrichtung angeordneten Sprossen (8) versehen ist, die nach dem Umschlingen des zu haltenden Gegenstandes in einem am Befestigerteil (2) auf der genenüberliegenden Seite angeformten, in einer Montagelage aufwärtsgerichteten Verriegelungshaken (9) mit einer der Sprossenform angepaßten Rille (10) einrastbar sind, **dadurch gekennzeichnet,** daß der Haken (9) in einer Montagelage oberhalb der Rille (10) mit einer Ein-führspitze (11) versehen ist, daß das Hakenmaß "D" in Höhe des Hakenvorsprungs (12) etwa 10 % größer ist als der Längenabstand "L" zwischen zwei benachbarten Sprossen (8) und daß die Hakenbreite "B" etwa 10 - 15 % schmaler ist als der Querabstand "Q" zwischen den Holmen (7) des Sprossenbandes (1).

2.  Kunststoffspannband nach Anspruch 1, dadurch gekennzeichnet, daß der Haken (9) unter Berücksichtigung des größten Umschlingungsdurchmessers etwa senkrecht zur Zugrichtung des Sprossenbandes (1) gerichtet ist.

3.  Kunststoffspannband nach Anspruch 1 oder 2, dadurch gekennzeichnet, daß der zum Band (1) hinweisende Rücken (13) des Hakens (9) gewölbt ist.

4.  Kunststoffspannband nach Anspruch 1 bis 3, dadurch gekennzeichnet, daß die Einführspitze (11) des Hakens (9) zur Bandseite hin geneigt ist.

**Claims**

1.  A synthetic plastics retaining strap for supporting cables, bundles of cables and like elongated objects with an integrated fixing part (2) adapted to be pressed onto a bolt (3), preferably a screw-threaded bolt, the retaining strap (1) being integrally formed on one (when installed) bottom end of the fixing part (2) and being provided with cross-rungs (8) which are disposed transversely to the direction of the strap and which, after the strap has been looped around the object to be supported, can engage a locking hook (9) which is integrally formed on the opposite side of the fixing part (2) and which is directed upwardly when installed and which has a groove (10) adapted to the shape of the cross-rung, characterised in that when in its installed position, the hook (9) is provided above the groove (10) with an insertion point (11) and in that the hook dimension "D" at the height of the hook projection (12) is about 10% greater than the longitudinal distance "L" between two adjacent cross-rungs (8) and in that the hook width "B" is about 10 - 15% narrower than the transverse gap "Q" between the longitudinal members (7) of the strap (1).

2. A synthetic plastics-retaining strap according to Claim 1, characterised in that having regard to the greatest looping diameter, the hook (9) is directed substantially at right-angles to the direction of pull of the strap (1).

3. A synthetic plastics retaining strap according to Claim 1 or 2, characterised in that the back (13) of the hook (9) and which points towards the strap (1), is curved.

4. A synthetic plastics retaining strap according to Claim 1 to 3, characterised in that the insertion point (11) of the hook (9) is inclined towards the side of the strap.

**Revendications**

1. Lanière de serrage en matière plastique pour le maintien en position de câbles, de faisceaux de câbles et d'éléments analogues de grande longueur par rapport à leur section, comportant, en tant que partie intégrante, un élément d'ancrage (2) s'emmanchant par pression sur un goujon (3), de préférence un goujon fileté, cette lanière de serrage étant en l'occurrence réalisée solidaire par moulage d'une extrémité, en position de montage, inférieure de l'élément d'ancrage (2) et munie de barrettes (8) disposées transversalement par rapport à l'axe longitudinal de la lanière, qui une fois la lanière enroulée autour de l'élément à maintenir en position viennent s'imbriquer, au moyen d'une gorge adaptée à la configuration des barrettes, dans un crochet de verrouillage (9) orienté vers le haut en position de montage, réalisé solidaire par moulage de l'autre côté de l'élément d'ancrage (2) se caractérisant par le fait que le crochet (9) comporte, en position de montage, au-dessus de la gorge (10), une languette d'introduction (11) que la cote "D" du crochet, à la hauteur de la saillie (12) qu'il comporte, est sensiblement supérieure à 10 % à la distance longitudinale "L" séparant deux barrettes voisines (8) et que la largeur "B" du crochet est plus courte dans une proportion de 10 à 15 % que l'intervalle de séparation "Q" des longerons (7) de la lanière à claire-voie (1).

2. Lanière de serrage en matière plastique suivant la revendication 1, se caractérisant par le fait que le crochet (9), en tenant compte du diamètre d'enserrage maximum possible, est disposé suivant une orientation sensiblement verticale par rapport au sens dans lequel on tire sur la lanière (1) pour la bloquer en position.

3. Lanière de serrage en matière plastique suivant la revendication 1 ou 2, se caractérisant par le fait que la partie arrière (13) du crochet (9) orientée vers la lanière (1) est bombée.

4. Lanière de serrage en matière plastique suivant les revendications 1 à 3, se caractérisant par le fait que la languette d'introduction (11) du crochet (9) est inclinée en direction de la lanière.

## FIG.1

## FIG. 2

## FIG.3

## FIG.4

EP 0 281 968 B1

## FIG. 5

## FIG.6

## FIG. 7